# EUROPEAN PATENT SPECIFICATION

(11) **EP 3 253 222 B1**
(45) Date of publication and mention of the grant of the patent: **22.06.2022**
(21) Application number: 16747181.2
(22) Date of filing: 03.02.2016
(51) Int. Cl.: A23C 9/142, A23C 9/13, A23C 1/04, A23C 1/16, A23C 9/16, A23G 3/46, A21D 2/26, A23L 29/30

(54) **PROCESS FOR MANUFACTURE OF MILK PERMEATE POWDERS**
VERFAHREN ZUR HERSTELLUNG VON MILCHPERMEATPULVERN
PROCÉDÉ POUR LA FABRICATION DE POUDRES DE PERMÉAT DE LAIT

(30) Priority: 04.02.2015 US 201562111703 P
(43) Date of publication of application: 13.12.2017
(73) Proprietor: Idaho Milk Products, Jerome, ID 83338 (US); South Dakota State University, Brookings, SD 57007 (US)
(72) Inventor: METZGER, Lloyd, Brookings, SD 57007 (US); MARELLA, Chenchaiah, Jerome, ID 83338 (US)
(74) Representative: Crease, Devanand John
(86) International application number: PCT/US2016/016351
(87) International publication number: WO 2016/126810

(56) References cited:
- EP-B1- 1 878 349
- EP-B1- 2 370 084
- EP-B1- 2 370 084
- WO-A1-2011/132178
- DE-A1- 19 935 011
- US-A- 4 599 164
- US-A- 6 033 700
- US-A1- 2009 252 849
- US-B2- 8 840 947

## Description

### FIELD

The disclosure relates to milk permeate powders and methods for the manufacture thereof. In another embodiment, the disclosure relates to mineral stabilized milk permeate powder and methods for the manufacture thereof.

### BACKGROUND

Milk permeate powder (MPP) is manufactured by removing protein from skim milk using filtration techniques such as ultrafiltration (UF) and diafiltration (DF). MPP is a co-product obtained during the manufacture of milk protein concentrates.

The presence of mineral salts, especially calcium phosphate and magnesium salts in milk permeate creates significant problems during MPP manufacture. Calcium and Magnesium salts exhibit reverse solubility, in the sense they become insoluble at higher temperatures and are precipitated on heat transfer surfaces such as evaporators. This problem becomes more pronounced as permeate is concentrated to higher solids. This type of deposit formation is generally referred to as mineral fouling.

Mineral fouling is a major problem in dairy product processing operations, significantly impacting Reverse Osmosis (RO), and thermal evaporation steps used in the MPP manufacturing process. Mineral fouling reduces process efficiency during RO and which reduces throughput, and during evaporation it results in formation of mineral deposits on heat transfer surfaces in the evaporator. This also leads to harboring of bacteria and necessitates the use of harsh chemicals such as acids for cleaning the process equipment.

In addition to mineral fouling problems, the presence of minerals at higher concentration also interferes with processing of permeate into value added products such as lactose. The presence of in-soluble calcium phosphate in the final MPP also causes the formation of large calcium phosphate particles that are insoluble when MPP is reconstituted.

In order to overcome the mineral fouling during concentration by RO and evaporation, processors add citric acid based and phosphate based chemicals. These chemicals keep the calcium phosphate in a soluble form thereby reducing the process related mineral fouling issues. Without adding these stabilizing chemicals it is nearly impossible to concentrate milk permeate by RO and evaporation. There are some other approaches in the prior art that utilize adjustment of permeate pH with sodium or potassium based chemicals, followed by heat precipitation of minerals. For example, US Patent 5,639,501 describes a process where in the pH of whey permeate containing about 15-24% solids is adjusted to 7.2 using a phosphate compound, heated to 68.3°C, and held at this temperature for 20-35 minutes in order to allow calcium phosphate to flocculate and precipitate. Vyas and Tong (2003) developed a process for recovering milk minerals from permeate using a combination of pH adjustment and heat treatment, followed by recovering the precipitated minerals utilizing Ultrafiltration. US patent # US 20060003052A1 describes a process of decalcification of milk permeate utilizing an ion exchange process. In this process, an ion based resin captures multivalent ions such as calcium and magnesium present in milk permeate and replaces them with monovalent ions such as sodium or potassium. All of these methods end up adding chemicals to the final product and alter the natural ratio of mineral in the permeate. Also these techniques add higher cost to the production process.

In addition, EP2370084B1 relates to human milk permeates and compositions containing the same obtained from fractionated whole human milk.

US4599164A describes a process that valorizes food by-products by a reverse osmosis for example lactoserum. The pH is temporarily lowered by the injection of carbon dioxide in the medium containing the food by-product before its pre-concentration by reverse osmosis, preferably in the medium to be treated under low or moderate pressure, at a point at which the velocity of circulation of the liquid medium increases.

DE19935011A1 describes a filtration process and apparatus for milk which involves adding gaseous carbon dioxide to lower the pH.

Thus, there is a need for methods for the manufacture of milk protein permeate powders that overcome the fouling and other process and product related problems.

### SUMMARY

The invention relates to a method for producing milk permeate powder comprising: (a) obtaining a permeate from skim milk; and (b) concentrating said permeate from step (a) to a solids content from 10% to 18%, while injecting carbon dioxide (CO₂) into said permeate.

In one embodiment, the disclosure relates to a method for producing milk permeate powder comprising: (a) injecting CO₂ into a permeate obtained from skim milk while concentrating said permeate.

In one embodiment, CO₂ is injected at a flow rate from about 0.5 L/min to about 2.5 L/min. In one embodiment, CO₂ is injected at a flow rate of about 1.5 L/min.

In one embodiment, CO₂ is injected at a flow rate from about 0.5 L/min to about 2.5 L/min per one L/min of permeate flowing through RO unit.

In one embodiment, CO₂ is injected at a flow rate of about 1.0 L/min per one L/min of permeate flowing through RO unit.

In one embodiment, CO₂ is injected at a flow rate of about 0.5 L/min per one L/min of permeate flowing through RO unit.

In one embodiment, the dissolved CO₂ content of the permeate following concentration with injection of CO₂ ranges from about 800 ppm to about 2400 ppm.

In one embodiment, the disclosure relates to a method for producing milk permeate powder comprising: (a) filtering skim milk to obtain a permeate; (b) concentrating said permeate of step (a) while injecting CO₂ into the permeate; (c) heating said concentrated permeate of step (b) to increase the temperature of said permeate; (d) settling said heat treated permeate of step (c) to produce a low mineral permeate and a high mineral permeate; and (e) spray drying a permeate obtained from step (d) to produce milk permeate powder.

In one embodiment, the skim milk has been injected with CO₂ prior to filtering. In another embodiment, the dissolved CO₂ content in the skim milk prior to filtering ranges from about 250 ppm to about 3500 ppm.

In one embodiment, the skim milk injected with CO₂ is allowed to settle or rest prior to filtering said skim milk.

In one embodiment, heating said concentrated permeate of step (b) increases the temperature of the permeate to a temperature ranging from about 72°C to about 85°C.

In another embodiment, heating said concentrated permeate of step (b) reduces the amount of CO₂ in the concentrated permeate.

In still another embodiment, heating said concentrated permeate of step (b) reduces the amount of dissolved CO₂ in the concentrated permeate to a range from about 150 ppm to about 250 ppm.

In one embodiment, the disclosure relates to a method for producing a milk permeate powder comprising: (a) filtering skim milk to obtain a permeate; (b) concentrating said permeate of step (a) while injecting CO₂ into the permeate; (c) heating said concentrated permeate of step (b) to increase the temperature of said permeate; (d) settling said heat treated permeate of step (c) to produce a low mineral permeate and a high mineral permeate; (e) concentrating a permeate obtained from step (d); (f) crystallizing a permeate obtained from step (e); and (g) spray drying a permeate obtained from step (f) to produce milk permeate powder.

The disclosure (not part of the invention) relates to a milk permeate powder produced by the methods disclosed herein.

The disclosure (not part of the invention) relates to a food product or beverage containing a milk permeate powder produced by the methods disclosed herein.

One non-limiting advantage of the methods disclosed herein is that injection of carbon dioxide (CO₂) during reverse osmosis helps to solubilize calcium phosphate salts and thus prevents their precipitation on RO membranes. This helps the RO run more efficiently and increases permeation rates.

One non-limiting advantage of the methods disclosed herein is that injection of CO₂ also eliminates the need for citrate or phosphate based chemicals for controlling mineral fouling during RO.

One non-limiting advantage of the methods disclosed herein is that heat treatment of the RO concentrate causes the CO₂ to be expelled and surprisingly results in the formation of small calcium phosphate particles that are stable and additional precipitation does not occur during evaporation.

One advantage of the methods disclosed herein is that the methods can be used to produce a mineral stabilized MPP, a low mineral MPP, or high mineral MPP.

One advantage of the methods disclosed herein is that chemicals are not added to the product nor does the method alter the natural balance of milk minerals (calcium, phosphate, sodium and potassium) present in milk permeate.

### BRIEF DESCRIPTION OF THE DRAWINGS

Exemplary embodiments of the invention are illustrated in the accompanying drawings, in which like reference numerals represent like parts throughout and in which:
FIG. 1 is a schematic flow chart of a typical milk permeate powder manufacturing process.
FIGS. 2A-2C are photographs of Calcium phosphate precipitate in reconstituted regular MPP at various concentrations and temperatures. A 100 µ stainless steel screen filter was used to filter the solutions. FIG 2A are photographs of calcium phosphate precipitate at 60°C. FIG 2B are photographs of calcium phosphate precipitate at 71°C. FIG 2C are photographs of calcium phosphate precipitate at about 82°C.
FIG. 3 is a schematic of one embodiment of the methods disclosed herein showing injection of CO₂ during reverse osmosis.
FIGS. 4A-4G are photographs showing separation of high mineral permeate layer in a lab scare settling experiment. The RO concentrate is heat treated to a temperature of 79°C and kept in the glass beakers for up to 60 min.
FIG. 5 is a photograph of a representative "settling tank" to allow separation of the concentrate into a low mineral permeate layer and a high mineral permeate layer.
FIGS. 6A-6C are photographs of calcium phosphate precipitate in reconstituted mineral stabilized MPP at various concentrations and temperatures. 100 µ stainless steel screen filters were used to filter the solutions. FIG 6A are photographs of calcium phosphate precipitate at 60°F. FIG 6B are photographs of calcium phosphate precipitate at 71°C. FIG 6C are photographs of calcium phosphate precipitate at 82°C.
FIGS. 7A-7C are representative photographs of distribution plates (a and b) and calandria tubes (c) of evaporator after processing heat treated RO concentrate. Photographs were taken after rinsing with water.
FIGS. 8A-8C are photographs of distribution plates (a and b) and calandria tubes(c) of evaporator after processing heat treated RO concentrate. Pictures were taken after Clean-In-Place (CIP) of the evaporator.
FIG. 9 is a photograph of calendria tubes of evaporator after processing heat treated RO concentrate. Pictures were taken after CIP of the evaporator.

Before explaining embodiments of the invention in detail, it is to be understood that the invention is not limited in its application to the details of construction and the arrangement of the components set forth in the following description or illustrated in the drawings. The invention is capable of other embodiments or being practiced or carried out in various ways. Also, it is to be understood that the phraseology and terminology employed herein is for the purpose of description and should not be regarded as limiting.

### DETAILED DESCRIPTION

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, melt index, temperature etc., is from 100 to 1,000, it is intended that all individual values, such as 100, 101, 102, *etc.,* and sub ranges, such as 100 to 144, 155 to 170, 197 to 200, etc., are expressly enumerated. For ranges containing values that are less than one or containing fractional numbers greater than one *(e.g.,* 1.1, 1.5, *etc.),* one unit is considered to be 0.0001, 0.001, 0.01 or 0.1, as appropriate. For ranges containing single digit numbers less than ten *(e.g.,* 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, relative amounts of components in a mixture, and various temperature and other parameter ranges recited in the methods.

As used herein, "beverage" refers to, without limitation, smoothie beverages, protein drinks, shakes, vegetable juice drinks, fruit juice drinks, dairy- based drinks, coffee- and tea-based drinks.

As used herein, a "confectionary" is a candy or a sweet-meat.

As used herein, "cultured dairy product," also known as fermented milk products, or cultured dairy foods, or cultured milk products, are dairy foods that have been fermented with lactic acid bacteria such as Lactobacillus, Lactococcus, and Leuconostoc. The fermentation process increases the shelf-life of the product, while enhancing the taste and improving the digestibility of milk. A range of different Lactobacilli strains has been grown in laboratories allowing for a wide range of cultured milk products with different tastes.

As used herein, a "dairy blend" is a blend of cream and an oil, often times vegetable oil. A dairy blend can also comprise a blend of butter, vegetable oil and water.

As used herein, "diafiltration" is a specialized type of ultrafiltration process in which the retentate is diluted with water and re-ultrafiltered, to reduce the concentration of soluble permeate components and increase further the concentration of retained components.

As used herein, "food product" includes but is not limited to dairy blends, bakery and confectionery items, dairy based blends, cultured dairy products, nutrition products and beverages.

As used herein, "flash drying" is a process by which wet material is dispersed into a stream of heated air (or gas) which conveys it through a drying duct. Using the heat from the airstream, the material dries as it is conveyed.

As used herein, "fouling" is the accumulation of unwanted material on solid surfaces to the detriment of function. The fouling materials can consist of either living organisms (biofouling) or a non-living substance (inorganic or organic). Fouling is usually distinguished from other surface-growth phenomena in that it occurs on a surface of a component, system or plant performing a defined and useful function, and that the fouling process impedes or interferes with this function.

As used herein, "freeze drying" is a process, often referred to as lyophilization, to gently freeze the product, then the water is extracted in the form of vapor using a highpressure vacuum. The vapor collects on a condenser below the freezing chamber, returns to ice and is removed. A gradual temperature rise extracts all remaining 'bound' moisture from the product. This process retains the physical structure of the product and preserves it for storage or transport.

As used herein, the term "milk" denotes milk obtained from an animal, for instance cow, goat or ewe. Typically, this term encompasses, *inter alia,* whole milk, skim milk and semi-skim milk. For the purposes of the invention, this term does not encompass milk permeate.

As used herein, "mineral fouling" refers to the deposit of minerals, including but not limited to calcium and phosphorous on a surface. In one embodiment, the surface is a heat transfer surface such as an evaporator.

As used herein, "milk permeate powder" is typically 85% lactose (minimum 80%), 3-4% protein, 9-15% ash plus a trace amount of fat. The total moisture level averages 5% with free moisture at 1.5% or below. The main components of MPP include lactose, non-protein nitrogen (NPN), and milk minerals. Among the milk minerals, Calcium, Phosphorous, Magnesium, Potassium, Sodium and Chloride are the major minerals present in MPP. Since MPP typically is manufactured from fresh skim milk, it has improved quality relative to whey permeate, which contains contaminants produced during cheese making. MPP produced from skim milk has a fresh, clean, sweet milky flavor and aroma.

As used herein, "permeate" is a high-lactose dairy ingredient produced through the removal of protein and other solids from milk or whey via physical separation techniques.

As used herein, "reverse osmosis" (RO) is a separation process that uses pressure, in excess of the osmotic pressure to force a solvent through a semi-permeable membrane, which retains the solute on one side and allows the pure solvent, such as water, to pass to the other side. In RO, an applied pressure is used to overcome osmotic pressure, a colligative property, which is driven by chemical potential, a thermodynamic parameter. RO can remove many types of molecules and ions from solutions and is used in both industrial processes and in producing potable water. Membranes used in RO do not allow large molecules or ions to pass through the pores, but allow smaller components of the solution such as water to pass freely.

As used herein, "roller/drum drying" uses rotating, steam heated drums to dry a substance. The water evaporates when the substance contacts the hot drum surface. The drum continues to rotate and after less than one full revolution, a thin sheet of dried substance is removed from the drum by a scraper knife. The dried sheet of substance is conveyed away from the drums using a screw auger and then moved to a hammer mill where the powder is broken into small particles. The powder particles consist of flakes of irregular, angular shape with a wrinkled surface and rough edges. The roller dried particles are flakes without vacuoles; no air cells are perceptible within the particles. The length and width of the flakes depend on the thickness of the film. The roller process creates a unique low density powder.

As used herein, the term "skim milk" is intended to mean heat-treated milk of which the fat content cannot exceed 0.50% by weight for 100 g of final product. Typically, this skim milk can be obtained by centrifugation prior to ultrafiltration.

As used herein, the term "semi-skim milk" is intended to mean heat-treated milk of which the fat content has been brought back to a content by weight of between 1.50% and 1.80% for 100 g of final product.

As used herein, "smoothie beverage" refers to a beverage with a characteristic thickness which can be attributed to the presence therein of ingredients such as sweeteners, acids, vitamins, fiber, fruit juice, fruit puree, milk, milk solids, milk proteins, soy milk, soy proteins, coffee, coffee solids, vegetable juice, vegetable puree, tea, tea solids, preservatives, buffers, colors, flavors, and combinations thereof. Smoothie beverages may be fruit-based, juice-based, dairy- based, coffee-based, soy-based, whey-based, vegetable-based, tea-based or a combination thereof. A "fruit smoothie beverage" is a smoothie that is fruit- based, juice-based or a combination thereof.

As used herein, "spray drying" is a method of producing a dry powder from a liquid or slurry by rapidly drying with a hot gas. This is a common method of drying of many thermally-sensitive materials, such as foods and pharmaceuticals. A consistent particle size distribution is a reason for spray drying. Air is the heated drying medium; however, if the liquid is a flammable solvent such as ethanol or the product is oxygen-sensitive then nitrogen is used.

As used herein, "ultrafiltration" (UF) refers to a pressure driven membrane separation technique in which a membrane is employed to separate different components in a fluid mixture. UF membranes have pore sizes less than 0.01 µ. Separation occurs based on molecular size and chemical interactions between the membrane and fluid components that are in contact with the membrane. In this process, pressure is used to push water molecules through the pores of a membrane while retaining the colloidal solids and salts. Typical operating pressures range from 30-150 psi (0.2-1.0 MPa).

### I. Method for Production of Milk Permeate Powder

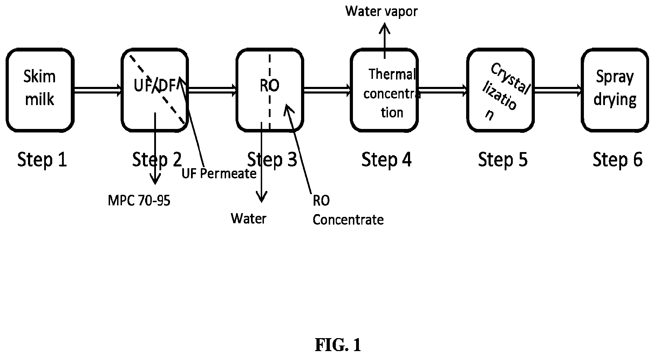

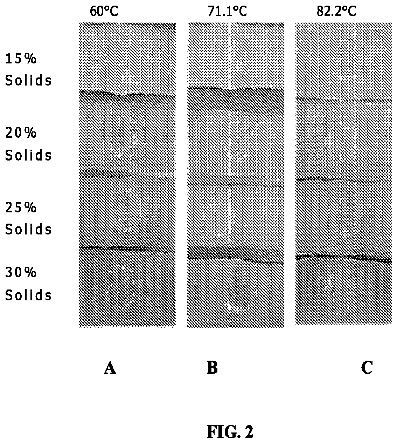

A typical MPP manufacturing process is shown in FIG. 1. In this process, the permeate obtained from ultrafiltraion (UF) of skim milk is concentrated utilizing reverse osmosis (RO) to a solids content of 15-20%. The RO concentrate is then further concentrated utilizing thermal evaporation to a solids content of 50-65%. The concentrate from evaporation is subjected to crystallization, followed by spray drying to obtain MPP. However, as discussed above, the presence of in-soluble calcium phosphate in the final MPP also causes the formation of large calcium phosphate particles that are insoluble when MPP is reconstituted (see FIG.2).

The disclosure is directed toward milk permeate powder, and methods of production thereof. In one embodiment, the disclosure relates to a method for manufacture of MPP. In another embodiment, the disclosure relates to methods for the manufacture of MPP comprising injecting carbon dioxide in permeate obtained from filtration of milk.

In one embodiment, the disclosure relates to a method for the manufacture of MPP comprising injecting CO₂ during a RO process. In one embodiment, the RO concentrate is heat-treated.

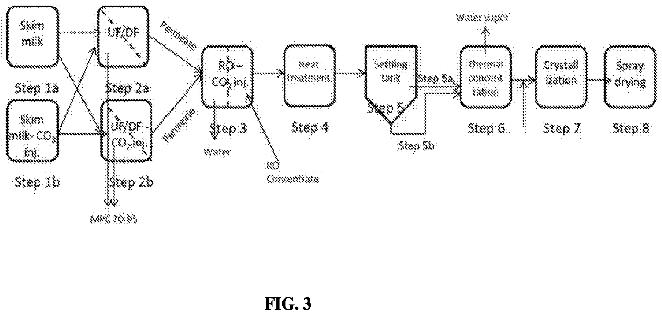

FIG. 3 is a schematic of the various processes disclosed herein. Any combination of the steps depicted in FIG. 3 can be employed based on the desired end-product. The various processes are described below, but one of ordinary skill in the art will understand that the processes can vary based on input material and desired functionality of the end result.

### A. Filtration

A MPP manufacturing process involves filtration of skim milk. In one embodiment, MPP manufacturing involves ultrafiltration (UF)/diafiltration (DF) of skim milk. In one embodiment, skim milk can be regular skim milk or skim milk that has been injected with CO₂

In one embodiment, the skim milk has reached a dissolved CO₂ level from about 300 ppm to about 2300 ppm. In another embodiment, the skim milk has reached a dissolved CO₂ level of about 500 ppm, or about 1,000 ppm, or about 1,500 ppm, or about 2,000 ppm or about 2,500 ppm.

In one embodiment, the skim milk has reached a dissolved CO₂ level of at least 200 ppm or at least 300 ppm, or at least 400 ppm, or at least 500 ppm, or at least 600 ppm, or at least 700 ppm, or at least 800 ppm, or at least 1400 ppm, or at least 1500 ppm, or at least 1600 ppm, or at least 1700 ppm, or at least 1800 ppm, or at least 1900 ppm, or at least 2000 ppm, or at least 2100 ppm, or at least 2200 ppm, or at least 2300 ppm, or at least 2400 ppm, or least 2500 ppm, or at least 2600 ppm.

In another embodiment, if the skim milk is injected with CO₂ the skim milk may be stabilized for a period of time before subjecting skim milk to UF/DF. In one embodiment, the stabilization time period is from about 10 minutes to 2 hours. In another embodiment, the stabilization time period is from about 30 minutes to 60 minutes. In another embodiment, the stabilization period is selected from the group consisting of: 5, 10, 15, 20, 25, 30, 35, 40, 45, 50, 55, 60, 65, 70, 75, 80, 85, 90, 95, 100, 105, 110, 115, 120, 125, 130, 135, 140, 145, and 150 minutes.

In another embodiment, the UF/DF process can be carried out with or without further injection of CO₂ during the process.

In one embodiment, injection of CO₂ during UF/DF is carried out at a flow rate from 0 to 10% of the flow of product in the UF (0 to 0.1 L of CO₂ per L of product flow). In one embodiment, injection of CO₂ during UF/DF is carried out at a flow rate from 0 to 20% of the flow of product in the UF (0 to 0.2 L of CO₂ per L of product flow). In one embodiment, injection of CO₂ during UF/DF is carried out at a flow rate from 0 to 30% of the flow of product in the UF (0 to 0.3 L of CO₂ per L of product flow). In one embodiment, injection of CO₂ during UF/DF is carried out at a flow rate from 0 to 40% of the flow of product in the UF (0 to 0.4 L of CO₂ per L of product flow).

In one embodiment, CO₂ can be injected at one location in the UF unit or injected at multiple injection ports, either totaling to 40% of the product flow or even higher.

The concentrate obtained from UF/DF is a milk protein rich material that has a protein to total solids ratio of 70 to 95% (MPC 70-95). The permeate from UF/DF is a co-product that is further processed in to MPP. The typical composition of permeate obtained from UF/DF is shown in Table 1.

**Table 1: Typical composition of permeate obtained from Ultrafiltration/Diafiltration process.**

| Component | Concentration, % (range) |
|---|---|
| Total solids | 3.3 to 5.5 |
| Protein | 0.1 to 0.15 |
| Ash | 0.35 to 0.45 |
| Lactose | 2.9 to 4 |
| Calcium | 0.03 to 0.06 |
| Dissolved CO₂ ppm | 100 - 1300 |

In one embodiment, UF/DF results in a concentrated product having from about 10% to about 20% of the weight of the input material.

In a typical UF/DF process, the milk membrane pore size varies from about 5 kDa to 10 kDa. In one embodiment, membrane pore size can range from about 1 kDa to 100 kDa.

In one embodiment, the DF process utilizes a diafiltration water addition of 0 to 75% of the milk flow in the UF process.

In one embodiment, the DF process utilizes a diafiltration water addition of 0 to 50% of the milk flow in the UF process.

In one embodiment, the DF process utilizes a diafiltration water addition of 0 to 25% of the milk flow in the UF process.

### B. Concentration

In one embodiment, the permeate obtained from UF/DF is further concentrated to a solids levels from about 10% to about 18%. In one embodiment, concentration is accomplished utilizing a RO process.

In one embodiment, the RO process is carried out with injection of CO₂. Not to be bound by any particular theory, but it is thought that the injection of CO₂ will improve the performance of RO process by limiting the fouling due to calcium phosphate.

In one embodiment, CO₂ is injected at a flow rate from about 0.5 L/min to about 5.0 L/min per one L/min of flow of permeate in the RO unit. In one embodiment, CO₂ is injected at a flow rate from about 0.5 L/min to about 2.5 L/min per one L/min of flow of permeate in the RO unit. In one embodiment, CO₂ is injected at a flow rate from about 0.5 L/min to about 2.0 L/min per one L/min of flow of permeate in the RO unit. In one embodiment, CO₂ is injected at a flow rate from about 0.5 L/min to about 1.5 L/min per one L/min of flow of permeate in the RO unit. In one embodiment, CO₂ is injected at a flow rate from about 0.5 L/min to about 1 .0 L/min per one L/min of flow of permeate in the RO unit.

In one embodiment, CO₂ is injected at a flow rate from about 1. 0L/min to about 4.5 L/min per one L/min of flow of permeate in the RO unit. In one embodiment, CO₂ is injected at a flow rate from about 1.5 L/min to about 4.0 L/min per one L/min of flow of permeate in the RO unit. In one embodiment, CO₂ is injected at a flow rate from about 2.0 L/min to about 3.5 L/min per one L/min of flow of permeate in the RO unit. In one embodiment, CO₂ is injected at a flow rate from about 2.5 L/min to about 3.0 L/min per one L/min of flow of permeate in the RO unit.

In another embodiment, CO₂ is injected at a flow rate of about 0.5 L/min per one L/min of flow of permeate in the RO unit. In another embodiment, CO₂ is injected at a flow rate of about 1.0 L/min per one L/min of flow of permeate in the RO unit. In still another embodiment, CO₂ is injected at a flow rate of about 1.5 L/min per one L/min of flow of permeate in the RO unit.

In one embodiment, injection of CO₂ during RO is at a flow of up to 0.5 L/min of CO₂ per one L/min of flow of permeate in the RO unit In one embodiment, injection of CO₂ during RO is at a flow of less than 1.0 L/min of CO₂ per one L/min of flow of permeate in the RO unit. In one embodiment, injection of CO₂ during RO is at a flow less than 0.75 L/min of CO₂ per one L/min of flow of permeate in the RO unit. Reference to the flow of permeate in the RO unit with regard to the injection of CO₂ can be applied interchangeably to any unit or apparatus used to concentrate the permeate.

In another embodiment, CO₂ is injected at a flow rate of about 0.5 L/min per one L/min of flow of permeate in the concentrating unit In another embodiment, CO₂ is injected at a flow rate of about 1.0 L/min per one L/min of flow of permeate in the concentrating unit. In still another embodiment, CO₂ is injected at a flow rate of about 1.5 L/min per one L/min of flow of permeate in the concentrating unit.

In one embodiment, injection of CO₂ during concentration is at a flow of up to 0.5 L/min of CO₂ per one L/min of flow of permeate in the concentrating unit. In one embodiment, injection of CO₂ during concentration is at a flow of less than 1.0 L/min of CO₂ per one L/min of flow of permeate in the concentrating unit. In one embodiment, injection of CO₂ during concentration is at a flow less than 0.75 L/min of CO₂ per one L/min of flow of permeate in the concentrating unit.

In one embodiment, the amount of dissolved CO₂ in the RO concentrate is from about 500 ppm to about 3000 ppm. In one embodiment, the amount of dissolved CO₂ in the RO concentrate is from about 750 ppm to about 2750 ppm. In one embodiment, the amount of dissolved CO₂ in the RO concentrate is from about 1000 ppm to about 2500 ppm. In one embodiment, the amount of dissolved CO₂ in the RO concentrate is from about 1250 ppm to about 2250 ppm. In one embodiment, the amount of dissolved CO₂ in the RO concentrate is from about 1500 ppm to about 2000 ppm.

In one embodiment, the amount of dissolved CO₂ in the RO concentrate is at least 500 ppm, or at least 1000 ppm, or at least 1500 ppm, or at least 2000 ppm..

In one embodiment, the amount of dissolved CO₂ in the RO concentrate is less than 3000 ppm or less than 2500 ppm.

A typical composition of concentrated permeate obtained from RO process is shown in Table 2. Table 2 also provides the amount of CO₂ in the concentrated permeate before heating (1,000 to 1,600) and the amount of CO₂ after heating (250-350).

**Table 2: Typical composition of concentrated permeate obtained from RO process**

| Component | Concentration, % (range) |
|---|---|
| Total solids | 10 to 18 |
| Protein | 0.39 to 0.6 |
| Minerals | 0.91 to 1.8 |
| Lactose | 9 to 16 |
| Calcium | 0.09 to 0.24 |
| Dissolved CO₂ before heating, ppm | 1000 -1600 |
| Dissolved CO₂ after heating, ppm | 250 - 350 |

In a typical RO process as used in the cheese, whey and milk processing industry, thin film composite membranes are used with a processing pressure ranging from about 250 to about 1000 psi. In one embodiment, thin film composite membranes are used with a processing pressure ranging from about 250 to about 750 psi (1.7-5.2 MPa).

In another embodiment, thin film composite membranes are used with a processing pressure ranging from about 250 to about 500 psi (1.7-3.4 MPa).

The membranes used in RO process permeate only water and some dissolved gasses, while retaining all or most of the solid material present in the permeate.

### C. Heat Treatment of Concentrated Permeate

In one embodiment, the concentrated permeate can be subjected to a heat treatment step. In one embodiment, the temperature of the concentrated permeate can be increased from a starting temperature ranging from 10 to 25°C to a temperate ranging from 63°-79°C.

In one embodiment, the temperature of the concentrated permeate, after heat treatment, ranges from 55°C to about 95°C. In one embodiment, the temperature of the concentrated permeate after heat treatment, ranges from 60°C to about 90°C. In one embodiment, the temperature of the concentrated permeate, after heat treatment, ranges from 65°C to about 85°C. In one embodiment, the temperature of the concentrated permeate, after heat treatment, ranges from 70°C to about 80°C.

In one embodiment, the heat treatment step increases the temperature of the concentrated permeate by about 45°C, or by about 50°C, or by about 55°C, or by about 60°C, or by about 65°C, or by about 70°C, or by about 75°C, or by about 80°C, or by about 85°C, or by about 90°C, or by about 95°C, or even greater than 95°C.

The heat treatment of the concentrated permeate can be applied utilizing a variety of heating methods. In one embodiment, the heat treatment is accomplished by the use of a heat exchanger.

In one embodiment, a shell and tube heat exchanger can be used for this heating process. In another embodiment, other forms of heating such as jacketed kettle, tubular heater or even a direct contact type heater with stem injection can be used. The heat treatment step employed helps expels the carbon dioxide and converts soluble calcium phosphate into small calcium phosphate particles. In this form, calcium phosphate loses its ability to form large particles that precipitate during the evaporation process. Moreover these small particles help remove fouling materials from the heat transfer surfaces.

As seen from the data presented in Table 2, upon heating the concentrated permeate, the majority of the CO₂ is released.

In one embodiment, after heating, the dissolved CO₂ in the concentrated permeate is from about 200 ppm to about 400 ppm. In one embodiment, after heating, the dissolved CO₂ in the concentrated permeate is from about 225 ppm to about 375 ppm. In one embodiment, after heating, the dissolved CO₂ in the concentrated permeate is from about 250 ppm to about 350 ppm. In one embodiment, after heating, the dissolved CO₂ in the concentrated permeate is from about 275 ppm to about 325 ppm.

In another embodiment, after heating, the dissolved CO₂ in the concentrated permeate is less than 600 ppm, or less than 550 ppm, or less than 500 ppm, or less than 450 ppm, or less than 400 ppm, or less than 350 ppm, or less than 300 ppm, or less than 250 ppm, or less than 200 ppm, or less than 150 ppm, or less than 100 ppm, or less than 50 ppm.

In one embodiment, heat-treating the concentrated permeate reduces the amount of dissolved CO₂ from about 10% to about 20% or from about 20% to about 30%, or from about 30% to about 40%, or from about 40% to about 50%, or from about 40% to about 60%, or from about 60% to about 70%, or from about 70% to about 80%, or from about 80% to about 90%, or greater than 90% as compared to the amount of dissolved CO₂ in the concentrate prior to heating.

In one embodiment, heat-treating the concentrated permeate reduces the amount of dissolved CO₂ by at least 30%, or at least 40%, or at least 50%, or at least 60%, or at least 70%, or at least 80%, or at least 90%, or at least 95%.

### D. Settling Tank

In another embodiment, the heat treated concentrated permeate can be transferred to a storage tank. In one embodiment, the storage tank can be a cylindrical, or a conical bottom tank.

In one embodiment, a conical bottom storage tank may be used. A tangential entry of the product into the tank may be useful. Pumping the heat-treated concentrated permeate into the holding tank also facilitates the release of dissolved CO₂ present in the concentrated permeate.

Pumping the heat-treated concentrated permeate into a settling tank, such as a conical bottom tank, will also help in separation of precipitated minerals from the concentrated permeate, and facilitates the manufacture of specialty products such as low mineral, and high mineral MPPs. In separation of high mineral material from low mineral material, it is preferred to allow the heat treated concentrated permeate stay in the tank undisturbed for a period of time.

In one embodiment, the time period is from about 3 min to about 180 minutes. In one embodiment, the time period is from about 10 min to about 160 minutes. In one embodiment, the time period is from about 20 min to about 140 minutes. In one embodiment, the time period is from about 40 min to about 120 minutes. In one embodiment, the time period is from about 60 min to about 100 minutes.

In one embodiment, the time period is from about 5 minutes to about 60 minutes. In one embodiment, the time period is from about 10 minutes to about 50 minutes. In one embodiment, the time period is from about 20 minutes to about 40 minutes.

In still another embodiment, the time period is from about 5, 10, 15,20,25,30,35,40,45, 50, 55, 60, 65, 70, 75, 80, 85, 90, 95, 100, 105, 110, 115, 120, 125, 130, 135, 140, 145, 150, 155, 160, 165, 170, 175, and 180 minutes

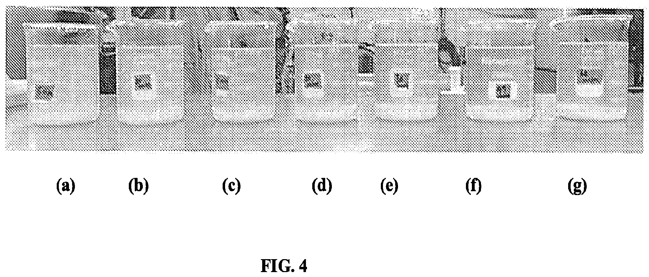

During this settling period, high density mineral rich materials settle to the bottom of the tank by a gravity settling process. Other methods of separating the mineral rich materials are possible, including but not limited to centrifugal decanters, and membrane filters. Separation of mineral rich and low mineral materials into two distinct layers by settling technique is shown in FIG. 4.

The amount of material that settles at the bottom of the tank depends upon the time allowed for the settling process. The approximate portion of mineral rich material that settles to the bottom of the tank, as percentage of the total volume of the permeate in the tank is shown in Table 3.

**Table 3: Settle volume at different time intervals expressed as a percentage of initial permeate volume in the tank. The permeate was heat treated to a temperature of 79 °C prior to settling.**

| Settling time, min | % of settled material |
|---|---|
| 5 | 23-29 |
| 10 | 19-20 |
| 15 | 15-17 |
| 20 | 15-17 |
| 30 | 15 |
| 45 | 12-15 |
| 60 | 12-15 |

### E. Thermal Concentration

In one embodiment, the material from the settling tank can be further concentrated. In one embodiment, the material from the settling tank can be concentrated using a thermal process, including but not limited to a falling film evaporator and a falling film plate evaporator.

In one embodiment, thermal concentration can be accomplished with or without vacuum.

In one embodiment, thermal concentration increases the solids content to at least 55% solids, or at least 60% solids, or at least 65% solids, or at least 70% solids.

In yet another embodiment, thermal concentration increases the solids content to about 50-75% solids. In yet another embodiment, thermal concentration increases the solids content to about 55-70% solids. In yet another embodiment, thermal concentration increases the solids content to about 60-65% solids.

### F. Crystallization

In another embodiment, the concentrate obtained from thermal concentration can be subjected to crystallization. The general steps of crystallization are (1) concentration; (2) nucleation; (3) crystal growth; (4) harvesting; and (5) washing.

In one embodiment, ultrasonication can be used for crystallization. Ultrasonication promotes fast and efficient crystallization resulting in a high yield of uniform lactose crystals. Sono-crystallization of lactose helps to gain the maximum yield of lactose crystals in a minimum time. A good crystal growth is substantial to ensure an efficient harvesting and washing of the lactose (extraction & purification). Sonication causes a supersaturation of lactose and initiates the primary nucleation of lactose crystals. Furthermore, continuous sonication contributes to a secondary nucleation, which ensures small crystal size distibution (CSD).

### G. Drying

In one embodiment, the crystallized product can be dried to obtain MPP. In one embodiment, the crystallized product can be spray dried to obtain MPP.

Spray dryers use some type of atomizer or spray nozzle to disperse the liquid or slurry into a controlled drop size spray. The most common of these are rotary disks and single-fluid high pressure swirl nozzles. Atomizer wheels are known to provide broader particle size distribution, but both methods allow for consistent distribution of particle size. Alternatively, for some applications two-fluid or ultrasonic nozzles are used. Depending on the process needs, drop sizes from 10 to 500 µm can be achieved with the appropriate choices. The most common applications are in the 100 to 200 µm diameter range. The dry powder is often free-flowing.

One type of spray dryer is a single effect spray dryer so named as there is only one drying air on the top of the drying chamber. In most cases, the air is blown in co-current of the sprayed liquid. A second type of spray dyer is a multiple effect spray dryers. Instead of drying the liquid in one stage, the drying is done through two steps: one at the top (as per single effect) and one for an integrated static bed at the bottom of the chamber. The integration of this fluidized bed allows, by fluidizing the powder inside a humid atmosphere, to agglomerate the fine particles and to obtain granules having commonly a medium particle size within a range of 100 to 300 µm. Due to the large particle size, these powders are free-flowing.

The fine powders generated by the first stage drying can be recycled in continuous flow either at the top of the chamber (around the sprayed liquid) or at the bottom inside the integrated fluidized bed. The drying of the powder can be finalized on an external vibrating fluidized bed.

The hot drying gas can be passed as a co-current or counter-current flow to the atomizer direction. The co-current flow enables the particles to have a lower residence time within the system and the particle separator (typically a cyclone device) operates more efficiently. The counter-current flow method enables a greater residence time of the particles in the chamber and usually is paired with a fluidized bed system.

In one embodiment, finely milled lactose monohydrate is suspended in water, and spray-dried to give spherical agglomerates of crystalline lactose monohydrate in a matrix of amorphous lactose. The result is a product that both flows and compresses well.

In another embodiment, the crystallized product can be dried using a freeze dryer. In another embodiment, the crystallized product can be dried using a drum dryer.

In another embodiment, crystallized product can be dried using a flash dryer. In still another embodiment, crystallized product can be dried using a roller dryer.

In one embodiment, the methods disclosed herein can reduce the time associated with cleaning equipment for the manufacture of MPP. In one embodiment, the methods disclosed herein can reduce the cleaning time from about 1 to about 5%, or from about 5% to about 10%, or from about 10% to about 15%, or from about 15% to about 20%, or from about 20% to about 25%, or from about 25% to 30%, or from about 30% to 35%, or from about 35% to about 40%, or from about 40% to about 45%, or from about 45% to about 50%, or from about 50% to about 55%, or from about 55% to about 60%, or from about 60% to about 65%, or from about 65% to about 70%, or from about 70% to about 75%, or from about 75% to about 80%, or from about 80% to about 85%, or from about 85% to about 90%, or from about 90 to 95%, or a reduction in time in excess of 95% as compared to the cleaning time of equipment associated with the traditional methods of MPP production.

In one embodiment, the methods disclosed herein can reduce the cleaning time of equipment by at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, or at least 95% as compared to the cleaning time of equipment associated with the traditional methods of MPP production.

In one embodiment, the methods disclosed herein can reduce the amount of acid needed to clean equipment needed for the manufacture of MPP. In one embodiment, the methods disclosed herein can reduce the amount of acid needed to clean equipment needed for the manufacture of MPP from about 1 to about 5%, or from about 5% to about 10%, or from about 10% to about 15%, or from about 15% to about 20%, or from about 20% to about 25%, or from about 25% to 30%, or from about 30% to 35%, or from about 35% to about 40%, or from about 40% to about 45%, or from about 45% to about 50%, or from about 50% to about 55%, or from about 55% to about 60%, or from about 60% to about 65%, or from about 65% to about 70%, or from about 70% to about 75%, or from about 75% to about 80%, or from about 80% to about 85%, or from about 85% to about 90%, or from about 90 to 95%, or a reduction in acid in excess of 95% as compared to the amount of acid needed to clean equipment associated with the traditional methods of MPP production.

In one embodiment, the methods disclosed herein can reduce acid needed to clean equipment by at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80%, at least 85%, at least 90%, or at least 95% as compared to the amount of acid needed to clean equipment associated with the traditional methods of MPP production.

### II. Uses of Milk Permeate Powders (not part of the invention)

In one embodiment, milk permeate powders produced by the methods disclosed herein can be used to produce a food product. In one embodiment, milk permeate powders produced by the methods disclosed herein can be incorporated into a food product.

In one embodiment, milk permeate powders produced by the methods disclosed herein can be used in a variety of ways including but not limited to standardization of dairy blends; bakery and confectionery; dairy based blends; cultured dairy products; fillers in nutrition products, animal food, animal feed, and pet food. CO₂ has been in use as a processing aid in several food applications.

### A. Standardization of Dairy Blends

In one embodiment, MPP can be used to standardize Skim Milk Powder (SMP) and other dairy blends. MPP is characterized by a clean, slightly salty taste and uniform particle size, and thus, is an ideal choice as an agent for standardizing blends. In countries where the protein content of milk varies greatly throughout the year, the addition of MPP not only adjusts the protein content down but also adds lactose, milk minerals and non-protein nitrogen.

### B. Bakery and Confectionary

In one embodiment, MPP can be used in a bakery product including but not limited to bagel, a biscuit, a bread, a bun, confectionary, a croissant, a dumpling, an English muffin, a muffin, a pita bread, a quickbread, a refrigerated/frozen dough products, dough, baked beans, a burrito, chili, a taco, a tamale, a tortilla, a pot pie, a ready to eat cereal, a ready to eat meal, stuffing, a microwaveable meal, a dessert, a brownie, a cake, a cheesecake, a coffee cake, a cookie, a dessert, a pastry, a sweet roll, a candy bar, a pie crust, pie filling, baby food, a baking mix, a batter, a breading, a gravy mix, a meat extender, a meat substitute, a seasoning mix, a soup mix, a gravy, a roux, a salad dressing, a soup, sour cream, a noodle, a pasta, ramen noodles, chow mein noodles, lo mein noodles, an ice cream inclusion, an ice cream bar, an ice cream cone, an ice cream sandwich, a cracker, a crouton, a doughnut, an egg roll, an extruded snack, a fruit and grain bar, a microwaveable snack product, a nutritional bar, a pancake, a par-baked *bakery product,* a pretzel, a pudding, a granola-based product, a snack chip, a snack food, a snack mix, a waffle, a pizza crust, and pizza snacks.

### C. Dairy Based Blend

MPP produced by the methods disclosed herein can be used to prepare a dairy based blend. In one embodiment, the dairy based blend can be margarine, or a spread with more than 40% fat, or a spread with 40% fat, or a spread with 18 to 30% fat.

### D. Cultured Dairy Products

In one embodiment, MPP can be used to prepare a cultured diary product including but not limited to acidophilus milk, buttermilk, cheese, creme fraiche, curd, keifer, sour cream, viili, yogurt, Greek Yogurt, and high-protein yogurt.

### E. Beverages

In one embodiment, MPP can be used as an ingredient for a beverage application. In another embodiment, MPP can be used as an ingredient for a smoothie.

In one embodiment, a beverage with MPP as an ingredient can be treated with β-galactosidase to hydrolyze the lactose to glucose and galactose, which may help make the beverage sweeter and improve digestability.

### EXAMPLES

The following Examples are provided for illustrative purposes only. The Examples are included herein solely to aid in a more complete understanding of the methods and products described herein. The Examples do not limit the scope of the invention claimed herein in any fashion.

### EXAMPLE 1

In one example, a mineral stabilized MPP was manufactured by UF/DF of skim milk, utilizing steps la, 2a, 3, 4, 5b, 8 as shown in FIG. 3.

In this process, 207.86 kg of skim milk (step la) was concentrated in a pilot UF unit (step 2a) to a volume of 31.86 kg. In this process, about 83.09 kg of water was added during UF/DF process. In total, about 259.48 kg of permeate was removed during the UF process. This permeate measured 4.12% solids, 0.11% protein, 0.36% ash, 0.031% calcium, 3.89% Lactose, and 143 ppm of dissolved CO₂.

The permeate obtained from this UF process was concentrated to a volume of 52.45 kg in a pilot RO unit (step 3). During the RO process, CO₂ was injected at a flow rate of about 1.5 L/min. The RO concentrate obtained from this process measured 16.25% solids, 0.44% protein, 1.37% minerals, 14.24% lactose, 0.08% calcium, and 1213 ppm of dissolved CO₂.

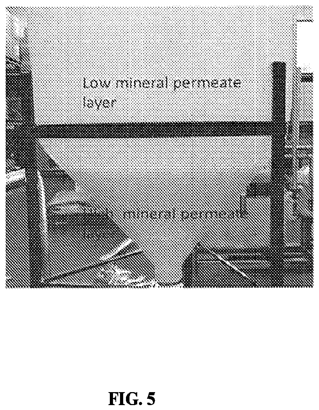

This concentrate was given heat treatment in a jacketed kettle (step 4) with vigorous mixing to increase the temperature to 79 °C. The heat treated concentrate was then pumped into a conical bottom tank (see FIG. 5 for a representative tank) using a tangential flow for the product entering the tank. The RO concentrate of OF permeate was kept in the conical bottom tank for 60 min.

The dissolved CO₂ content of the product was 289 ppm. The heat treated concentrate was spray dried (step 8) utilizing a pilot scale spray dryer. Composition of mineral stabilized MPP obtained from this process is given in Table 4.

**Table 4: Approximate composition of low, high and mineral stabilized MPPs produced from a pilot scale production process.**

| **Per 100g of product** | **Mineral stabilized MPP** | **Low Mineral MPP** | **High mineral MPP** | **Typical MPP** |
|---|---|---|---|---|
| **TYPICAL COMPOSITION** | | | | |
| Protein-as is (g) | 3.20 | 3.75 | 3.51 | 3.37 |
| Lactose (g) | 85.00 | 84.85 | 79.90 | 84.90 |
| Ash (g) | 9.30 | 7.38 | 14.31 | 9.35 |
| Moisture (g) | 1.50 | 3.29 | 2.55 | 2.25 |
| Fat (g) | 0.00 | 0.00 | 0.00 | 0.13 |
| Dissolved CO2, ppm | 0.00 | 0.00 | 0.00 | 0.00 |

| **MINERAL PROFILE** | | | | |
|---|---|---|---|---|
| Calcium (mg) | 535.00 | 206.00 | 2,560.00 | 413.00 |
| Magnesium (mg) | 131.00 | 126.00 | 208.00 | 107.00 |
| Potassium (mg) | 2,500.00 | 2,650.00 | 2,420.00 | 2,510.00 |
| Sodium (mg) | 865.00 | 867.00 | 806.00 | 810.00 |
| Chloride (mg) | 1,510.00 | 1520.00 | 1410.00 | 1730.00 |
| Phosphorous (mg) | 773.00 | 608.00 | 1,890.00 | 730.00 |

### EXAMPLE 2

In another example, 263.2 kg of skim milk was injected with CO₂ so as to obtain a dissolved CO₂ level of 1896 ppm (step lb of FIG. 3). The CO₂ injected skim was held in a balance tank for about 60 min. After the 60 min equilibration time, the skim milk was concentrated in a pilot UF/DF unit (step 2b).

During UF process additional CO₂ injection was carried out at a flow rate of from 1.5 to 2.0 L/min. The skim milk was concentrated to a final volume of 45.45 kg. In this process about 105.27 kg of water was added during UF process. In total, about 321.36 kg of permeate was removed from UF/DF process. This permeates measured 4.3% solids, 0.13% protein, 0.43% ash, 0.05% calcium, 3.74% Lactose, and 967 ppm of dissolved CO2.

The permeate obtained from this UF/DF process was concentrated to a volume of 60.55 kg in a pilot RO unit (step 3). During the RO process CO2 was injected at a flow rate of about 1.5 L/min. The RO concentrate obtained from this process measured 15.95% solids, 0.53% protein, 1.6% ash, 13.72% lactose, 0.22% calcium, and 1543 ppm of dissolved CO₂.

This concentrate was given heat treatment in a jacketed kettle (step 4) increasing the temperature to 79 °C. The heat treated concentrate was pumped into a conical bottom tank (figure 4) using a tangential flow for the product entering the tank. The dissolved CO₂ content of the product was 346 ppm. This heat treated concentrate could be further concentrated in a falling film evaporator (step 6 of FIG. 3), subjected to crystallization of lactose (step 7 of FIG. 3) and spray dried (step 8 of FIG. 3) to obtain milk permeate powder.

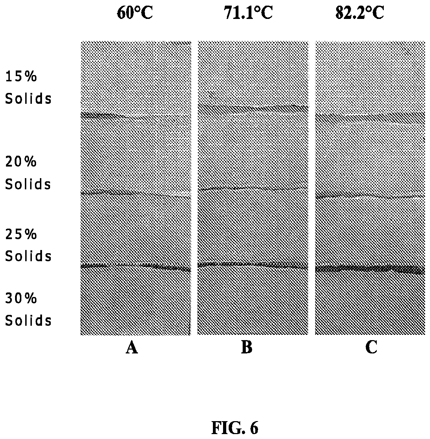

The MPPs produced from this process will not form large insoluble calcium phosphate particles that plug filters (see FIG. 6).

### EXAMPLE 3

In one example, 260.41 kg of skim milk (step 1b) was injected with CO₂ so as to obtain a dissolved CO₂ level of 354 ppm. The CO₂ injected skim was held in a balance tank for about 60 min. After the 60 min equilibration time, the skim milk was concentrated in a pilot UF/DF unit (step 2a) without any additional injection of CO₂. The skim milk was concentrated to a final volume of 44.18 kg. In this process about 102.73 kg of water was added during UF process. In total, about 316.93 kg of permeate was removed from UF/DF process. This permeates measured 4.08% solids, 0.12% protein, 0.40% ash, 0.035% calcium, 3.56% Lactose, and 318 ppm of dissolved CO₂.

The permeate obtained from this UF process was concentrated to a volume of 68.41 kg in a pilot RO unit (step 3). During the RO process CO₂ was injected at a flow rate of about 1.5 L/min. The RO concentrate obtained from this process measured 16.26% solids, 0.48% protein, 1.47% minerals, 14.31% lactose, 0.09% calcium, and 1187 ppm of dissolved CO2.

This concentrate was given heat treatment in a jacketed kettle (step 4 of FIG. 3) increasing the temperature to 79 °C. The heat treated concentrate was pumped into a conical bottom tank using a tangential flow for the product entering the tank. The dissolved CO₂ content of the product was 354 ppm. The heat treated concentrated product was allowed to settle in a conical bottom tank for 60 min.

During this time the permeate separated into two distinct layers. The top layer is a low mineral permeate while the bottom portion is a mineral rich permeate. These two distinct layers were harvested in two different products called low mineral MPP (Lo Min MPP) and high mineral MPP (Hi Min MPP).

For production of Lo Min MPP, the top permeate layer was decanted from the tank (step 5a of FIG. 3) and was spray dried using a pilot scale spray dryer. For production of Hi Min MPP, the bottom layer was removed from an outlet valve fitted at the bottom of the tank (step 5b of FIG. 3) and spray dried. The composition of Lo Min MPP and Hi Min MPP products thus obtained are shown in Table 4 above. The Lo Min MPP or the Hi Min MPP could be further concentrated in a falling film evaporator (step 6 of FIG. 3), subjected to crystallization of lactose (step 7 of FIG. 3) and spray dried (step 8 of FIG. 3) to obtain Hi Min or Lo Min MPP.

### EXAMPLE 4

About 18,000 lbs of permeate obtained using process 1b-2a-3 of FIG. 3 was heated to 79.5 °C in a jacketed tank. The heat treated product was fed to a pilot scale seven pass falling film evaporator at a feed rate of 1200 lb/h. The heating and boiling temperatures of the evaporator were set at 79.5°C and 68°C, respectively. The solids of the evaporator concentrate fluctuated between 45 to 53%.

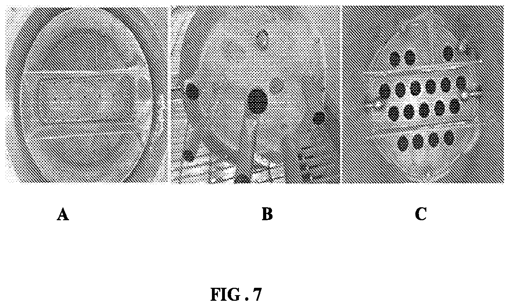

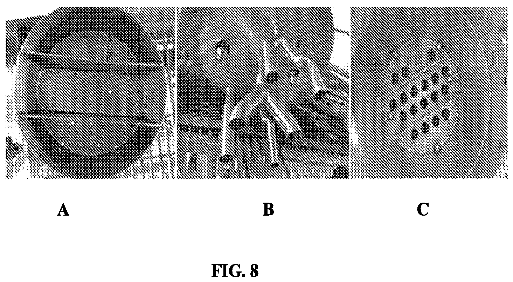

During the entire 15 hour run, no signs of fouling were observed and 5,000 lbs of concentrate was collected that had 50.91% solids. At the end of the run and after flushing, the evaporator was dismantled and the distribution plates and calandria were observed for fouling. FIGS. 7 and 8 are photographs after the 15 hour run. The MPPs produced from this process did not form large insoluble calcium phosphate particles that plug filters (see FIG. 7 and FIG. 8).

### EXAMPLE 5

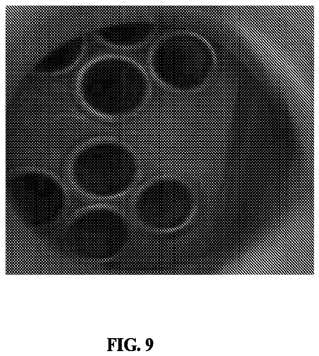

In another example, UF permeate was obtained from steps 1a, 2a, and 3 of FIG. 3. The RO concentrate obtained from step 3 was heated to 76.6°C in a series of two shell and tube heaters. The heat treated product was further concentrated in a falling film evaporator (step 6 of FIG. 3) followed by crystallization and spray drying (steps 7 and 8 of FIG. 3). Minimal fouling was observed in the evaporator. Acid required for cleaning the evaporator was reduced by about 33.3%. A picture of evaporator tubes at the end of CIP cleaning was shown in FIG. 9.

Although specific embodiments have been illustrated and described herein, it will be appreciated by those of ordinary skill in the art that any arrangement that is calculated to achieve the same purpose may be substituted for the specific embodiments shown. Therefore, it is intended that this invention be limited only by the claims .

## Claims

1. A method for producing a milk permeate powder comprising;
(a) obtaining a permeate from skim milk; and
(b) concentrating said permeate to a solids content from 10% to 18% while injecting carbon dioxide (CO₂) into said permeate.

2. The method of Claim 1, wherein said skim milk has been injected with CO₂ prior to obtaining a permeate.

3. The method of Claim 2, wherein the skim milk has a dissolved CO₂ content from 250 ppm to 3,500 ppm prior to obtaining the permeate.

4. The method of Claim 1, wherein obtaining a permeate from skim milk is accomplished by filtration.

5. The method of Claim 3, wherein filtration is ultrafiltration and/or diafiltration.

6. The method of Claim 3, wherein filtration of skim milk occurs with injection of CO₂ into skim milk.

7. The method of Claim 1, wherein concentrating said permeate occurs with injection of CO₂.

8. The method of Claim 7, wherein concentrating said permeate is by reverse osmosis.

9. The method of Claim 8, wherein injection of CO₂ is at a rate from 0.1 to 1.0 L/min of CO₂ per one L/min of permeate flowing through RO unit.

10. The method of Claim 8, wherein injection of CO₂ is at a rate of 0.5 L/min of CO₂ per one L/min of permeate flowing through RO unit.

11. The method of Claim 7, wherein the permeate has a CO₂ content from 800 ppm to 2400 ppm after concentration.

12. The method of Claim 1 further comprising;
(c) heating said concentrated permeate of step (b) to increase the temperature of said permeate;
(d) settling said heat treated permeate of step (c) to produce a low mineral permeate and a high mineral permeate;
(e) spray drying a permeate obtained from step (d) to produce milk permeate powder.

## Patentansprüche

1. Verfahren zur Herstellung eines Milchpermeatpulvers, das Folgendes beinhaltet:
(a) Gewinnen eines Permeats aus Magermilch; und
(b) Konzentrieren des genannten Permeats auf einen Feststoffgehalt von 10 % bis 18 % unter gleichzeitigem Injizieren von Kohlendioxid (CO₂) in das genannte Permeat.

2. Verfahren nach Anspruch 1, wobei vor dem Gewinnen eines Permeats CO₂ in die genannte Magermilch injiziert wurde.

3. Verfahren nach Anspruch 2, wobei die Magermilch vor dem Gewinnen des Permeats einen Gehalt an gelöstem CO₂ von 250 ppm bis 3500 ppm hat.

4. Verfahren nach Anspruch 1, wobei das Gewinnen eines Permeats aus Magermilch durch Filtration erfolgt.

5. Verfahren nach Anspruch 3, wobei die Filtration Ultrafiltration und/oder Diafiltration ist.

6. Verfahren nach Anspruch 3, wobei die Filtration der Magermilch mit der Injektion von CO₂ in die Magermilch erfolgt.

7. Verfahren nach Anspruch 1, wobei das Konzentrieren des genannten Permeats mit der Injektion von CO₂ erfolgt.

8. Verfahren nach Anspruch 7, wobei das Konzentrieren des genannten Permeats durch Umkehrosmose erfolgt.

9. Verfahren nach Anspruch 8, wobei das Injizieren von CO₂ mit einer Rate von 0,1 bis 1,0 l/min CO₂ pro ein l/min an durch die RO-Einheit fließendem Permeat erfolgt.

10. Verfahren nach Anspruch 8, wobei das Injizieren von CO₂ mit einer Rate von 0,5 l/min CO₂ pro ein l/min an durch die RO-Einheit fließendem Permeat erfolgt.

11. Verfahren nach Anspruch 7, wobei das Permeat nach dem Konzentrieren einen CO₂-Gehalt von 800 ppm bis 2400 ppm hat.

12. Verfahren nach Anspruch 1, das ferner Folgendes beinhaltet:
(c) Erhitzen des genannten konzentrierten Permeats aus Schritt (b), um die Temperatur des genannten Permeats zu erhöhen;
(d) Absetzenlassen des genannten hitzebehandelten Permeats aus Schritt (c), um ein mineralarmes Permeat und ein mineralreiches Permeat herzustellen;
(e) Sprühtrocknen eines in Schritt (d) gewonnenen Permeats zur Herstellung von Milchpermeatpulver.

## Revendications

1. Procédé de production d'une poudre de perméat de lait comprenant ;
(a) l'obtention d'un perméat à partir de lait écrémé ; et
(b) la concentration dudit perméat jusqu'à une teneur en matières solides de 10 % à 18 % tout en injectant du dioxyde de carbone (CO₂) dans ledit perméat.

2. Procédé selon la revendication 1, dans lequel ledit lait écrémé a reçu une injection de CO₂ avant l'obtention d'un perméat.

3. Procédé selon la revendication 2, dans lequel le lait écrémé présente une teneur en CO₂ dissous de 250 ppm à 3500 ppm avant l'obtention du perméat.

4. Procédé selon la revendication 1, dans lequel l'obtention d'un perméat à partir de lait écrémé est accomplie par filtration.

5. Procédé selon la revendication 3, dans lequel la filtration est une ultrafiltration et/ou une diafiltration.

6. Procédé selon la revendication 3, dans lequel la filtration de lait écrémé se produit avec l'injection de CO₂ dans le lait écrémé.

7. Procédé selon la revendication 1, dans lequel la concentration dudit perméat se produit avec l'injection de CO₂.

8. Procédé selon la revendication 7, dans lequel la concentration dudit perméat se fait par osmose inverse.

9. Procédé selon la revendication 8, dans lequel l'injection de CO₂ est à un débit de 0,1 à 1,0 L/min de CO₂ pour un L/min de perméat en écoulement à travers une unité OI.

10. Procédé selon la revendication 8, dans lequel l'injection de CO₂ est à un débit de 0,5 L/min de CO₂ pour un L/min de perméat en écoulement à travers une unité OI.

11. Procédé selon la revendication 7, dans lequel le perméat présente une teneur en CO₂ de 800 ppm à 2400 ppm après concentration.

12. Procédé selon la revendication 1 comprenant en outre ;
(c) le chauffage dudit perméat concentré de l'étape (b) pour élever la température dudit perméat ;
(d) la décantation dudit perméat traité thermiquement de l'étape (c) pour produire un perméat faiblement minéral et un perméat hautement minéral ;
(e) le séchage par pulvérisation d'un perméat obtenu à l'étape (d) pour produire une poudre de perméat de lait.
